# FASCICULE DE BREVET EUROPEEN

(11) **EP 4 713 663 B1**
(45) Date de publication et mention de la délivrance du brevet: **13.05.2026**
(21) Numéro de dépôt: 25744131.1
(22) Date de dépôt: 24.07.2025
(51) Int. Cl.: G01N 22/00, G01N 22/02, G01N 22/04, G01S 13/88

(54) **SYSTÈME DE SCAN RADAR À HAUTE RÉSOLUTION POUR L'ANALYSE NON INVASIVE DE CIBLES**
SCANNER RADAR MIT HOCH AUFLÖSUNG FÜR DIE NICHT INVASIVE ANALYSE DER ZIEL
HIGH-RESOLUTION RADAR SCANNING SYSTEM FOR NON-INVASIVE TARGET ANALYSIS

(30) Priorité: 23.08.2024 FR 2409070
(43) Date de publication de la demande: 25.03.2026
(73) Titulaire: Optikan, 33290 Blanquefort (FR)
(72) Inventeur: PERRAUD, Jean-Baptiste, 33290 Blanquefort (FR); MAURES, Matthieu, 33290 Blanquefort (FR); CASSAR, Quentin, 33290 Blanquefort (FR)
(74) Mandataire: A.P.I. Conseil
(86) Numéro de dépôt international: PCT/EP2025/071369
(87) Numéro de publication internationale: WO 2026/032738

(56) Documents cités:
- WO-A1-2021/214016
- WO-A1-2024/091157
- US-A1- 2023 358 691

## Description

### Domaine technique

La présente invention concerne le domaine des systèmes d'imagerie radar, et plus particulièrement les systèmes de scan pour l'analyse non invasive de cibles utilisant des réseaux de radars émetteurs-récepteurs à configuration géométrique irrégulière.

Des systèmes similaires sont connus de US2023358691A1.

### Technique antérieure

Les systèmes d'imagerie radar conventionnels utilisent généralement des configurations régulières de radars émetteurs-récepteurs, ce qui limite leur résolution spatiale et leur capacité à analyser des cibles de manière précise.

Ces systèmes peinent souvent à s'adapter à des cibles en mouvement, compromettant ainsi la qualité des données acquises.

De plus, l'interprétation des données radar repose fréquemment sur des méthodes manuelles ou des algorithmes rigides, ce qui rend difficile la classification automatique et précise des objets détectés.

Par ailleurs, ces systèmes manquent généralement de flexibilité pour s'adapter aux différentes caractéristiques des cibles analysées, ce qui peut conduire à des résultats sous-optimaux dans certaines situations.

Enfin, les techniques actuelles ne permettent pas toujours une analyse non invasive suffisamment détaillée des structures internes complexes, limitant ainsi leur applicabilité dans certains domaines critiques.

Ainsi, il existe un besoin pour un système d'imagerie radar innovant capable de surmonter ces limitations.

### Résumé de l'invention

L'invention vise à résoudre, au moins partiellement, ce besoin.

Un premier aspect de l'invention concerne un système de scan pour l'analyse non invasive de cibles.

En pratique, le système comprend,
- au moins un capteur radar qui comprend une pluralité de radars émetteurs-récepteurs qui sont arrangés en une configuration bidimensionnelle pour générer une représentation radar d'au moins une cible,
   dans lequel,
- chaque radar émetteur-récepteur présente une empreinte bidimensionnelle prédéterminée identique et est conçu pour, lors d'acquisitions séquentielles, émettre des signaux électromagnétiques via son émetteur et au moins une première antenne, et recevoir des signaux électromagnétiques réfléchis correspondants via son récepteur et au moins une deuxième antenne, les signaux électromagnétiques ayant une fréquence comprise entre 3 GHz et THz,
- pour une matrice de MxN radars émetteurs-récepteurs, le système est conçu pour effectuer K acquisitions séquentielles, chaque acquisition correspondant à au moins une mesure effectuée par tout ou partie de la matrice de radars émetteurs-récepteurs et contribuant à un segment distinct, Ci, de la représentation radar, pour une position relative différente entre le capteur radar et la cible, les acquisitions séquentielles étant obtenues en déplaçant le capteur radar par rapport à la cible ou vice versa, selon une direction de déplacement, D, prédéterminée ou adaptative, permettant ainsi une construction progressive et par morceaux de la représentation radar,
- les radars émetteurs-récepteurs sont disposés en un réseau à géométrie irrégulière avec un décalage dc progressif entre eux, dans au moins une des deux dimensions de leur empreinte bidimensionnelle, ce décalage étant inférieur à l'empreinte d'un radar émetteur-récepteur individuel dans au moins la dimension correspondante, cet agencement étant conçu de telle sorte que l'acquisition des segments distincts, Ci, de la représentation radar est réalisée progressivement dans le temps, et
- l'arrangement des radars émetteurs-récepteurs et le nombre K d'acquisitions séquentielles sont conçus pour obtenir une résolution spatiale prédéterminée dans la représentation radar qui est substantiellement améliorée par rapport à la résolution correspondant au décalage entre les radars émetteurs-récepteurs, cette amélioration étant fonction du nombre total K d'acquisitions et du nombre de radars émetteurs-récepteurs dans au moins une dimension de la configuration bidimensionnelle.

Dans un premier mode de réalisation du premier aspect de l'invention, le décalage dc progressif entre les radars émetteurs-récepteurs est soit constant avec une valeur de décalage identique entre chaque paire de radars émetteurs-récepteurs adjacents, soit variable avec des valeurs de décalage différentes entre les paires de radars émetteurs-récepteurs adjacents, soit une combinaison de décalages constants et variables entre différentes paires de radars émetteurs-récepteurs adjacents.

Dans un deuxième mode de réalisation du premier aspect de l'invention, le réseau à géométrie irrégulière avec décalage dc progressif des radars émetteurs-récepteurs est conçu selon un motif géométrique choisi parmi : un décalage linéaire, un motif en quinconce, un motif en spirale, un arrangement fractal, une disposition pseudo-aléatoire, ou un motif en grille déformée.

Dans un troisième mode de réalisation du premier aspect de l'invention, le système comprend au moins un système optique qui est couplé optiquement au capteur radar, le système optique comprenant au moins élément optique pour la mise en forme des signaux électromagnétiques émis et reçus par un ou plusieurs des radars émetteurs-récepteurs.

Dans un quatrième mode de réalisation du premier aspect de l'invention, le système comprend en outre, au moins un processeur de reconstruction de représentation radar qui est couplé fonctionnellement au capteur radar et qui est conçu pour reconstruire la représentation radar à partir de tout ou partie des K séquences de mesures générées lors de tout ou partie des acquisitions séquentielles.

Dans un premier exemple du quatrième mode de réalisation du premier aspect de l'invention, le processeur de reconstruction de représentation radar comprend ou est couplé à un module d'intelligence artificielle inclut dans le système, le module d'intelligence artificielle étant conçu pour,
- recevoir la représentation radar ou tout ou partie des acquisitions séquentielles, dites données d'entrée de modèle,
- déterminer, à partir des données d'entrée de modèle, les contours d'objets détectés dans la cible,
- extraire, à partir des données d'entrée de modèle, des caractéristiques spécifiques des objets détectés,
- classifier les objets détectés en les associant à des classes prédéterminées d'objets, sur la base des caractéristiques extraites.

Dans une première variante du premier exemple du quatrième mode de réalisation du premier aspect de l'invention, le module d'intelligence artificielle est en outre conçu pour,
- générer des métadonnées associées à chaque objet détecté, comprenant au moins sa classification et sa position dans la représentation radar, et
- intégrer les métadonnées générées à la représentation radar.

Dans une deuxième variante du deuxième exemple du quatrième mode de réalisation du premier aspect de l'invention, le système comprend en outre,
- au moins une interface de communication réseau, et
- au moins un module d'apprentissage en ligne couplé au module d'intelligence artificielle, le module d'apprentissage en ligne étant conçu pour,
   -- établir une connexion avec un au moins un serveur distant via l'interface de communication réseau,
   -- recevoir du serveur distant des données de mise à jour comprenant,
      --- de nouveaux modèles de classification,
      --- de nouvelles classes d'objets à détecter, et/ou
      --- des paramètres ajustés pour l'extraction de caractéristiques,
   -- intégrer les données de mise à jour reçues dans le module d'intelligence artificielle,
   -- adapter dynamiquement les algorithmes de détection et de classification du module d'intelligence artificielle en fonction des données de mise à jour reçues,
   -- permettre au module d'intelligence artificielle d'identifier et de classer de nouveaux objets détectés conformément aux données de mise à jour, et
   -- transmettre au serveur distant des informations sur les performances de classification suite à la mise à jour, de manière à permettre un processus itératif d'amélioration du module d'intelligence artificielle.

Dans un deuxième exemple du quatrième mode de réalisation du premier aspect de l'invention, le processeur de reconstruction de représentation radar est conçu pour reconstruire la représentation radar en effectuant les étapes suivantes,
- prétraitement des données acquises, comprenant l'extraction d'informations de phase et d'amplitude des K séquences de mesures et la compensation du décalage dc progressif entre les radars,
- génération itérative segments distincts, Ci, de la représentation radar pour chaque acquisition, en tenant compte de la géométrie irrégulière du réseau de radars et en utilisant les résultats du prétraitement,
- fusion progressive des segments distincts, Ci, de la représentation radar, intégrant les informations de position relative entre le capteur radar et la cible pour chaque acquisition, et utilisant les résultats des étapes précédentes pour affiner la fusion, et
- génération d'une représentation radar finale par synthèse itérative, combinant les informations traitées à chaque étape.

Dans une variante du deuxième exemple du quatrième mode de réalisation du premier aspect de l'invention, le processeur de reconstruction de représentation radar est en outre conçu pour effectuer les étapes supplémentaires suivantes,
- application de techniques d'amélioration de la résolution exploitant la diversité spatiale créée par le décalage dc progressif des radars, en s'appuyant sur les résultats de la fusion,
- post-traitement adaptatif de la représentation radar fusionnée, incluant l'intégration de métadonnées générées par le module d'intelligence artificielle si présent, et utilisant les informations des étapes précédentes pour optimiser le traitement, et
- intégration des résultats de ces étapes supplémentaires dans la génération de la représentation radar finale, de manière à permettre une amélioration itérative de la qualité et de la précision de la reconstruction.

Un deuxième aspect de l'invention concerne une utilisation d'un système selon le premier aspect de l'invention pour l'analyse non invasive de cibles hétérogène.

En pratique, cette utilisation comprend les étapes suivantes,
- positionnement du système par rapport à une cible hétérogène,
- acquisition de K séquences de mesures,
- reconstruction d'une représentation radar de la cible hétérogène,
- analyse de la représentation radar pour détecter des variations localisées de propriétés diélectriques au sein de la cible,
- classification des variations détectées en utilisant le module d'intelligence artificielle, et
- génération d'une carte bidimensionnelle ou tridimensionnelle de la cible intégrant les variations classifiées et leurs caractéristiques associées.

Dans un premier mode de réalisation du deuxième aspect de l'invention, la cible hétérogène est en mouvement relatif par rapport au système pendant l'acquisition des K séquences de mesures, et comprenant en outre les étapes de,
- de compensation du mouvement relatif dans la reconstruction de la représentation radar, et
- d'analyse temporelle des variations détectées pour identifier des changements dynamiques au sein de la cible.

Dans un deuxième mode de réalisation du deuxième aspect de l'invention, le module d'intelligence artificielle est adapté dynamiquement pendant l'analyse via le module d'apprentissage en ligne de manière à permettre,
- l'identification et la classification de nouvelles catégories de variations non préalablement enregistrées,
- l'amélioration continue de la précision de classification des variations détectées, et
- l'adaptation en temps réel des paramètres d'acquisition et de reconstruction en fonction des caractéristiques spécifiques de la cible analysée.

### Brève description des dessins

D'autres caractéristiques et avantages de l'invention seront mieux compris à la lecture de la description qui va suivre et en référence aux dessins annexés, donnés à titre illustratif et nullement limitatif.
[Fig.1] La [Fig.1] représente une vue schématique du système selon l'invention.
[Fig.2] La [Fig.2] représente une vue en perspective d'une mise en œuvre du système selon l'invention.
[Fig.3] La [Fig.3] représente une vue de dessus d'un exemple radar-émetteur selon l'invention.
[Fig.4] La [Fig.4] représente une vue schématique du radar-émetteur de la [Fig.3] couplée avec un élément optique.
[Fig.5] La [Fig.5] représente un exemple de réseau à géométrie irrégulière selon l'invention.
[Fig.6] La [Fig.6] présente deux vues d'un système de scan selon l'invention : la partie (S) montre une vue latérale du système, tandis que la partie (T) illustre une vue de dessus du même système.
[Fig.7] La [Fig.7] représente un exemple de processus de reconstruction d'une représentation radar selon l'invention, pour une configuration selon la [Fig.6].
[Fig.8] La [Fig.8] représente un exemple de représentation radar selon l'invention.

Les figures ne respectent pas nécessairement les échelles, notamment en épaisseur, et ce, à des fins d'illustration.

En outre, certains dessins sont présentés en couleurs et/ou en transparence, car leur représentation en noir et blanc est impossible. En particulier, les couleurs sont nécessaires dans ces dessins pour discerner des détails qui seraient perdus s'ils étaient présentés en noir et blanc.

### Description des modes de réalisation

### Remarques préliminaires

Afin de ne pas obscurcir la description et détourner le lecteur de la compréhension des enseignements de l'invention, nos explications n'iront pas au-delà de ce qui est considéré comme nécessaire pour la compréhension et l'appréciation des concepts sous-jacents de l'invention. En effet, les modes de réalisation illustrés dans la description sont, pour la plupart, composés d'éléments connus de la personne du métier.

### Objectif de l'invention

L'un des objectifs principaux de l'invention est de permettre une analyse non invasive précise et détaillée de cibles en utilisant un système radar innovant, capable de surmonter les limitations des systèmes conventionnels en termes de résolution spatiale et d'adaptabilité.

Pour cela, les inventeurs proposent un système de scan radar comprenant une configuration géométrique irrégulière de radars émetteurs-récepteurs, couplée à un processeur de reconstruction avancé et à un module d'intelligence artificielle.

Cette disposition permet d'améliorer significativement la résolution spatiale de la représentation radar tout en offrant une flexibilité accrue dans l'acquisition et le traitement des données.

En particulier, le système vise à s'adapter dynamiquement aux caractéristiques spécifiques de chaque cible, y compris celles en mouvement, tout en assurant une classification automatique et précise des objets détectés.

Cette approche a pour but d'élargir le champ d'application de la technologie radar à de nouveaux domaines nécessitant une analyse non invasive approfondie des structures internes complexes, même dans des conditions d'utilisation variables et exigeantes.

### Structure générale de l'invention

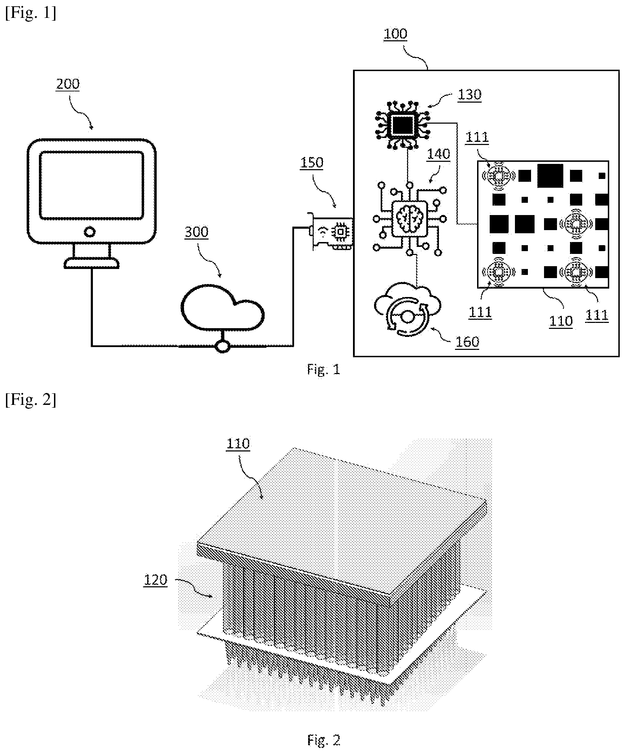

Comme illustré sur la [Fig.1], le système 100 de scan pour l'analyse non invasive de cibles 10 comprend au moins un capteur radar 110.

Le terme «capteur radar» désigne ainsi un composant essentiel du système 100 de scan pour l'analyse non invasive de cibles 10. À titre d'exemple, dans l'invention, le terme «capteur radar» peut désigner : un ensemble de radars miniaturisés disposés sur une surface plane pour l'inspection de structures, un réseau de capteurs intégrés dans un dispositif portable pour l'analyse de matériaux composites, ou encore un système de balayage radar monté sur un drone pour la cartographie de terrains.

Plus précisément, comme illustré sur la [Fig.1], le capteur radar 110 comprend une pluralité de radars émetteurs-récepteurs 111.

On entend par «radar émetteur-récepteur» un élément individuel du capteur radar 110 capable d'émettre des signaux électromagnétiques et de recevoir leurs réflexions. À titre d'exemple, dans l'invention, le terme «radar émetteur-récepteur» peut inclure : un module radar compact intégrant une antenne d'émission et une antenne de réception pour l'analyse de couches de matériaux, un circuit électronique miniaturisé capable de générer et de traiter des signaux haute fréquence pour la détection de défauts dans des structures, ou un composant radar spécialisé conçu pour fonctionner dans la bande des ondes millimétriques pour l'imagerie à haute résolution.

Dans l'invention, les radars émetteurs-récepteurs 111 sont arrangés en une configuration bidimensionnelle.

À titre d'exemple, dans l'invention, le terme «bidimensionnelle» peut désigner : une matrice rectangulaire de capteurs radar pour l'inspection de panneaux solaires, une disposition en grille hexagonale de radars émetteurs-récepteurs 111 pour l'analyse de structures aéronautiques, ou une configuration en spirale plane de modules radar pour la cartographie de sols.

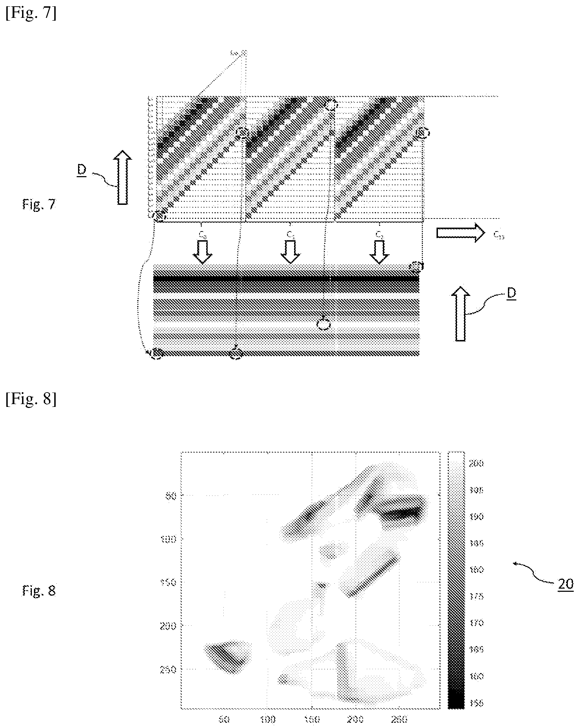

Grâce à cette disposition, la configuration bidimensionnelle génère une représentation radar 20 d'au moins une cible, comme illustré sur la [Fig.8].

On entend par «représentation radar» une image ou une carte générée par le système 100 à partir des signaux émis et reçus par les radars émetteurs-récepteurs 111. À titre d'exemple, dans l'invention, le terme «représentation radar» peut comprendre : une image en niveaux de gris montrant la densité des objets détectés dans une structure, une carte thermique représentant les variations de propriétés diélectriques dans un matériau composite, ou une visualisation 3D reconstruite à partir de multiples balayages 2D d'un site archéologique.

Le terme «cible» fait référence à l'objet ou à la zone analysée de manière non invasive par le système 100. À titre d'exemple, dans l'invention, le terme «cible» peut désigner : une structure architecturale à inspecter pour détecter des défauts cachés comme des fissures ou des vides, un sol à analyser pour localiser des objets enfouis tels que des canalisations ou des vestiges archéologiques, ou un tissu biologique à examiner de manière non invasive pour détecter des anomalies comme des tumeurs.

Dans cette configuration, chaque radar émetteur-récepteur 111 présente une empreinte bidimensionnelle prédéterminée identique.

On entend par « empreinte » la taille totale occupée par le radar émetteur-récepteur 111, incluant ses broches et la zone de dégagement électronique (« courtyard », en anglais) nécessaire à la bonne brasure des composants sur le circuit imprimé.

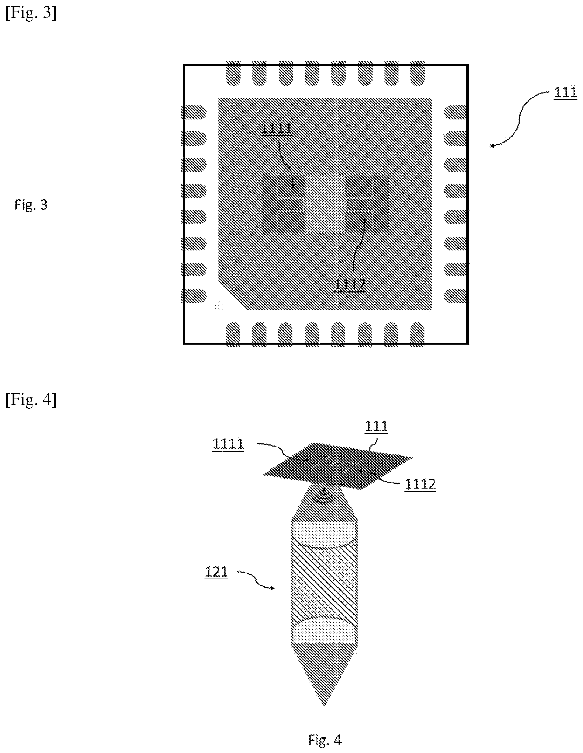

De plus, comme illustré sur la [Fig.3] et la [Fig.4], chaque radar émetteur-récepteur 111 est conçu pour émettre des signaux électromagnétiques via son émetteur et au moins une première antenne 1111 lors d'acquisitions séquentielles.

Parallèlement, chaque radar émetteur-récepteur 111 est également conçu pour recevoir des signaux électromagnétiques réfléchis correspondants via son récepteur et au moins une deuxième antenne 1112.

On entend par « signaux électromagnétiques réfléchis » les ondes électromagnétiques qui, après avoir été émises par le radar émetteur-récepteur 111, sont renvoyées par la cible 10 et captées par le récepteur du radar. Ces signaux contiennent des informations essentielles sur les propriétés et la structure de la cible 10 analysée. À titre d'exemple, dans l'invention, le terme «signaux électromagnétiques réfléchis» peut comprendre : des ondes millimétriques réfléchies par les différentes couches d'un matériau composite, permettant d'en analyser la structure interne sans dommage; des signaux haute fréquence renvoyés par des défauts ou des fissures dans une structure architecturale, révélant ainsi des anomalies invisibles à l'œil nu; ou encore des échos radar provenant de différentes profondeurs d'un sol, fournissant des informations sur la composition et la stratification du terrain pour des applications géologiques ou archéologiques. La capacité d'une cible à réfléchir ces signaux est mesurée par sa réflectivité.

Dans le contexte des radars térahertz utilisés dans cette invention, la réflectivité peut être influencée par des phénomènes spécifiques à ces hautes fréquences, comme une sensibilité accrue aux petites particules et aux variations de l'indice de réfraction de l'air.

Dans l'invention, les signaux électromagnétiques ont une fréquence comprise entre 3 GHz et 30 THz. Cette gamme de fréquences, particulièrement dans la partie térahertz (0,06 à 10 THz), permet au système 100 d'être utilisé dans divers domaines, notamment pour la détection de matériaux cachés, l'imagerie à travers les vêtements pour la sécurité, ou encore l'étude de phénomènes à petite échelle.

En termes de structure, le système 100 est conçu pour une matrice de MxN radars émetteurs-récepteurs 111.

Dans un exemple, chaque radar de cette matrice émet un signal L-FMCW (Linear Frequency Modulated Continuous Wave) dans la gamme spécifiée. Le signal réfléchi est ensuite capté par le récepteur du radar. En plus du signal L-FMCW, le système 100 peut également utiliser d'autres types de signaux radar. Le Stepped Frequency Continuous Wave (SFCW) permet une émission par paliers de fréquence, offrant une flexibilité accrue dans la résolution en distance. Le Continuous Wave (CW) émet un signal continu à fréquence fixe, particulièrement utile pour la mesure précise des vitesses radiales. Ces différentes modalités d'émission élargissent les capacités d'analyse du système 100, permettant son adaptation à diverses conditions et exigences de mesure.

Dans son fonctionnement, le système 100 effectue K acquisitions séquentielles, où K est un nombre entier. Lors de chaque acquisition, le système 100 génère une fréquence de battement en comparant le signal émis et le signal reçu. Cette fréquence de battement contient l'information sur la distance et la vitesse de l'objet analysé.

Ainsi, chaque acquisition correspond à au moins une mesure effectuée par tout ou partie de la matrice de radars émetteurs-récepteurs 111. La puissance du signal reçu est mesurée et utilisée pour calculer la réflectivité de la cible. Cette réflectivité est généralement convertie en décibels (dB) pour compresser la large gamme de valeurs possibles.

Le terme « mesure » fait référence à l'action d'acquisition et d'enregistrement des signaux électromagnétiques réfléchis par la cible 10, effectuée par tout ou partie de la matrice de radars émetteurs-récepteurs 111 lors de chaque acquisition séquentielle. À titre d'exemple, dans l'invention, le terme «mesure» peut désigner : l'enregistrement de l'amplitude et de la phase des signaux réfléchis à un instant donné pour créer une image précise de la structure interne d'un objet, la capture de l'effet Doppler pour analyser les mouvements subtils au sein d'une cible comme les vibrations d'un pont, ou l'acquisition de données de polarisation pour différencier les types de matériaux dans une structure complexe comme un bâtiment multi-couches.

Pour une représentation efficace, comme illustré sur la [Fig.8], les valeurs de réflectivité mesurées peuvent être codées sur un octet, donnant une plage de 0 à 255. Ce codage permet de représenter une large gamme de valeurs de réflectivité de manière compacte, facilitant ainsi le stockage et la transmission des données.

Pour une représentation améliorée, les valeurs de réflectivité mesurées peuvent être codées sur au moins dix bits, donnant une plage de 0 à au moins 1023. Ce codage étendu permet une représentation plus fine et détaillée des variations de réflectivité, particulièrement utile pour l'analyse de cibles complexes ou l'étude de phénomènes subtils. À titre d'exemple, dans l'invention, ce codage de précision accrue peut être utilisé pour : détecter des variations plus fines dans la densité des matériaux lors de l'inspection de structures critiques, ou caractériser les propriétés de nouveaux matériaux composites. Cette approche, bien que légèrement plus exigeante en termes de stockage et de traitement des données, offre des possibilités accrues pour des applications nécessitant une discrimination plus fine des propriétés des cibles analysées.

Toutefois, selon les besoins et les ressources disponibles, on pourra envisager d'autres options d'encodage qui ne se limitent pas à un nombre de bits multiple de huit. En effet, il est possible de choisir un encodage sur un nombre arbitraire de bits en fonction des exigences spécifiques de l'application. Par exemple, un encodage sur onze bits offrirait une plage de 0 à 2047, permettant une discrimination encore plus fine des valeurs de réflectivité. De même, un encodage sur treize bits étendrait la plage à 0-8191, offrant une granularité exceptionnelle pour des applications nécessitant une précision extrême. Ces choix d'encodage non conventionnels peuvent être particulièrement pertinents dans des contextes où chaque bit supplémentaire apporte une valeur significative à l'analyse, tout en maintenant un équilibre optimal entre la précision des données et les contraintes de stockage et de traitement.

Il est à noter que chaque acquisition contribue à un segment distinct Ci de la représentation radar 20, comme illustré sur la [Fig.7].

On entend par «segment distinct» une partie spécifique et unique de la représentation radar 20, obtenue lors d'une acquisition séquentielle particulière. L'ensemble des segments distincts Ci, une fois combinés, forme la représentation radar 20 complète. À titre d'exemple, dans l'invention, le terme «segment distinct» peut inclure : une tranche verticale d'une image radar 2D obtenue lors d'un balayage linéaire d'une paroi pour détecter des défauts structurels, un secteur angulaire d'une représentation radar 20 circulaire résultant d'un balayage rotatif pour l'inspection à 360 degrés d'un pilier, ou une zone spécifique d'une carte de propriétés diélectriques correspondant à une position donnée du capteur radar 110 lors de l'analyse d'un sol pour la détection d'objets enfouis.

En pratique, chaque acquisition est réalisée pour une position relative différente entre le capteur radar 110 et la cible.

Le terme «position relative» fait référence à la relation spatiale entre le capteur radar 110 et la cible 10 au moment de chaque acquisition. Cette position change pour chaque mesure, permettant d'obtenir des perspectives variées de la cible 10 et d'améliorer la résolution de la représentation finale. À titre d'exemple, dans l'invention, le terme «position relative» peut désigner : la distance et l'angle entre un capteur radar 110 portable et une paroi à analyser pour la détection de câbles électriques cachés, la hauteur et l'orientation d'un drone équipé de radars survolant une zone agricole pour évaluer l'humidité du sol, ou la position le long d'un rail de guidage d'un système de scan radar inspectant la coque d'un navire pour détecter des fissures ou de la corrosion.

Concrètement, les acquisitions séquentielles sont obtenues en déplaçant le capteur radar 110 par rapport à la cible 10 ou vice versa.

Dans ce processus, le déplacement suit une direction de déplacement D prédéterminée ou adaptative.

On entend par «direction de déplacement D prédéterminée ou adaptative» le parcours suivi par le capteur radar 110 par rapport à la cible 10 (ou vice versa) lors des acquisitions séquentielles. Cette direction peut être fixée à l'avance ou s'adapter en fonction des besoins de l'analyse. À titre d'exemple, dans l'invention, le terme « direction de déplacement prédéterminée ou adaptative» peut désigner : un parcours linéaire prédéfini pour scanner une surface plane comme un mur, un motif de balayage en spirale s'adaptant à la forme d'un objet complexe tel qu'une sculpture, ou une trajectoire optimisée en temps réel pour maximiser la couverture d'une zone d'intérêt comme un site archéologique.

En conséquence, ce processus permet une construction progressive et par morceaux de la représentation radar 20.

En ce qui concerne leur disposition, les radars émetteurs-récepteurs 111 sont disposés en un réseau à géométrie irrégulière.

On entend par «réseau à géométrie irrégulière» la disposition non uniforme des radars émetteurs-récepteurs 111. À titre d'exemple, dans l'invention, le terme «réseau à géométrie irrégulière » peut désigner : une configuration en quinconce des capteurs radar pour améliorer la couverture spatiale, un arrangement spiral des émetteurs-récepteurs pour optimiser la détection de défauts circulaires, ou une disposition pseudo-aléatoire des modules radar pour réduire les interférences et améliorer la qualité de l'image.

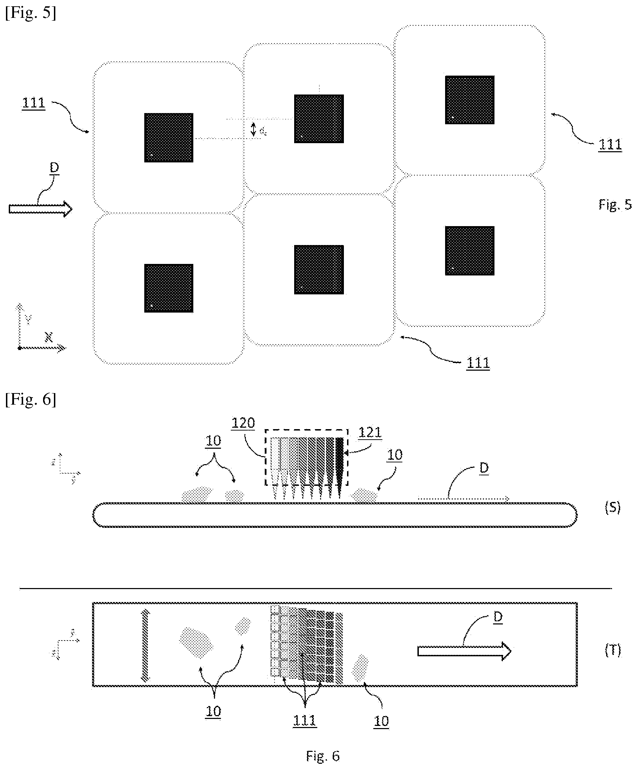

Plus précisément, comme illustré sur la [Fig.5], le réseau présente un décalage dc progressif entre les radars émetteurs-récepteurs 111. Ce décalage dc progressif existe dans au moins une des deux dimensions de leur empreinte bidimensionnelle.

Le terme «décalage progressif» fait référence à l'espacement non uniforme entre les radars émetteurs-récepteurs 111 dans le réseau à géométrie irrégulière. Ce décalage est inférieur à la taille d'un radar émetteur-récepteur 111 individuel dans au moins la dimension correspondante. À titre d'exemple, dans l'invention, le terme «décalage progressif » peut inclure : un espacement croissant entre les capteurs du centre vers les bords du réseau pour améliorer la sensibilité aux bords de la zone analysée, un décalage variable suivant une fonction mathématique spécifique pour optimiser la résolution dans certaines directions, ou un arrangement asymétrique des radars pour adapter le champ de vision à la forme de la cible.

Il est important de souligner que le décalage est inférieur à la l'empreinte d'un radar émetteur-récepteur 111 individuel dans au moins la dimension correspondante.

On entend par «inférieur» une caractéristique dimensionnelle du décalage dc progressif entre les radars émetteurs-récepteurs 111 dans le réseau à géométrie irrégulière. Ce terme indique que la valeur du décalage est plus petite que l'empreinte d'un radar émetteur-récepteur 111 individuel dans au moins une dimension correspondante. Cette configuration permet d'obtenir une résolution spatiale améliorée et une couverture plus fine de la zone analysée. À titre d'exemple, dans le contexte de l'invention, le terme «inférieur» peut désigner : un décalage horizontal entre deux radars adjacents qui est plus petit que l'empreinte d'un seul radar, permettant ainsi un chevauchement partiel des champs de vision; un espacement vertical entre les rangées de radars qui est moindre que l'empreinte d'un radar individuel, assurant une continuité dans la couverture verticale; ou encore un décalage diagonal dans une configuration en quinconce qui reste en deçà de l'empreinte d'un radar émetteur-récepteur 111, optimisant ainsi la distribution spatiale des capteurs.

À titre d'exemple concret, comme illustré sur la [Fig.5], si les radars émetteur-récepteur 111 utilisés ont une dimension de 5 mm x 5 mm, mais que leur empreinte totale est de 7 mm x 7 mm en raison des broches et de la zone de dégagement électronique (« courtyard », en anglais), le décalage dc sera inférieur à 7 mm. Cela représente la distance minimale possible entre deux radars adjacents, tout en assurant une disposition optimale pour l'amélioration de la résolution spatiale.

Grâce à cette configuration, l'agencement des radars émetteurs-récepteurs 111 est conçu pour réaliser progressivement dans le temps l'acquisition des segments distincts Ci de la représentation radar 20.

De plus, l'arrangement des radars émetteurs-récepteurs 111 et le nombre K d'acquisitions séquentielles sont conçus pour obtenir une résolution spatiale prédéterminée dans la représentation radar 20.

On entend par «résolution spatiale» la précision avec laquelle le système 100 peut distinguer les détails dans la représentation radar 20. La résolution spatiale est substantiellement améliorée par rapport à la résolution correspondant au décalage entre les radars émetteurs-récepteurs 111. À titre d'exemple, dans l'invention, le terme « résolution spatiale» peut comprendre : la capacité à distinguer deux objets rapprochés dans une image radar 2D d'une structure complexe, la précision de localisation d'un défaut microscopique dans un matériau composite analysé, ou la finesse des détails observables dans une carte de propriétés diélectriques d'un sol stratifié.

En conséquence, la résolution spatiale est substantiellement améliorée par rapport à la résolution correspondant au décalage entre les radars émetteurs-récepteurs 111.

Il est à noter que l'amélioration de la résolution spatiale est fonction du nombre total K d'acquisitions.

Enfin, l'amélioration de la résolution spatiale est également fonction du nombre de radars émetteurs-récepteurs 111 dans au moins une dimension de la configuration bidimensionnelle.

### Caractéristiques du décalage progressif dans le réseau de radars émetteurs-récepteurs

Le système 100 selon l'invention présente des caractéristiques spécifiques concernant le décalage dc progressif entre les radars émetteurs-récepteurs 111.

En effet, le décalage dc progressif peut prendre différentes formes.

Premièrement, le décalage dc progressif entre les radars émetteurs-récepteurs 111 peut être constant. Dans ce cas, une valeur de décalage identique existe entre chaque paire de radars émetteurs-récepteurs 111 adjacents.

Deuxièmement, et alternativement, le décalage dc progressif peut être variable. Dans cette configuration, des valeurs de décalage différentes existent entre les paires de radars émetteurs-récepteurs 111 adjacents.

Enfin, une troisième possibilité combine les deux approches précédentes. Plus précisément, le décalage dc progressif peut être une combinaison de décalages constants et variables entre différentes paires de radars émetteurs-récepteurs 111 adjacents.

Il est important de noter que ces différentes configurations du décalage dc progressif offrent une flexibilité dans l'arrangement des radars émetteurs-récepteurs 111 au sein du système 100. Par conséquent, cette flexibilité peut influencer la résolution spatiale de la représentation radar 20.

### Configurations géométriques du réseau à géométrie irrégulière des radars émetteurs-récepteurs

Le système 100 selon l'invention présente des caractéristiques spécifiques concernant le réseau à géométrie irrégulière avec décalage dc progressif des radars émetteurs-récepteurs 111.

Dans ce contexte, le réseau à géométrie irrégulière est conçu selon un motif géométrique spécifique.

Plus précisément, le motif géométrique du réseau à géométrie irrégulière peut prendre plusieurs formes qui incluent un décalage linéaire, un motif en quinconce, un motif en spirale, un arrangement fractal, une disposition pseudo-aléatoire, ou un motif en grille déformée.

Tout d'abord, comme illustré sur la [Fig.5] et la [Fig.6], le décalage linéaire représente une configuration où les radars émetteurs-récepteurs 111 sont décalés de manière progressive et linéaire.

Ensuite, le motif en quinconce dispose les radars émetteurs-récepteurs 111 en alternance, créant un motif similaire à celui des cases d'un échiquier.

Par ailleurs, le motif en spirale organise les radars émetteurs-récepteurs 111 selon une forme spiralée. Dans le cas de configurations spirales ou circulaires, le décalage dc peut prendre la forme d'un angle plutôt que d'une distance linéaire.

De plus, l'arrangement fractal utilise des motifs qui se répètent à différentes échelles.

En outre, la disposition pseudo-aléatoire place les radars émetteurs-récepteurs 111 de manière apparemment aléatoire, mais suivant en réalité un algorithme défini.

Enfin, le motif en grille déformée représente une configuration où une grille régulière de radars émetteurs-récepteurs 111 est déformée de manière contrôlée.

En conclusion, ces différents motifs géométriques offrent une variété d'options pour optimiser la disposition des radars émetteurs-récepteurs 111 dans le système 100.

### Système optique et mise en forme des signaux électromagnétiques

Comme illustré sur la [Fig.2], le système 100 selon l'invention comprend au moins un système optique 120.

Plus précisément, le système optique 120 est couplé optiquement au capteur radar 110.

Dans sa configuration, comme illustré sur la [Fig.4], le système optique 120 comprend au moins un élément optique 121 pour la mise en forme des signaux électromagnétiques.

Concrètement, l'élément optique 121 du système optique 120 assure la mise en forme des signaux électromagnétiques émis et reçus par un ou plusieurs des radars émetteurs-récepteurs 111.

On entend par «élément optique» un composant du système optique 120 conçu pour manipuler et contrôler les signaux électromagnétiques émis et reçus par les radars émetteurs-récepteurs 111 du capteur radar 110. L'élément optique 121 joue un rôle clé dans l'optimisation des performances du capteur radar 110 en modifiant les caractéristiques des signaux électromagnétiques. À titre d'exemple, dans le contexte de l'invention, le terme «élément optique » peut désigner : une lentille diélectrique façonnée pour focaliser les signaux radar sur une zone spécifique de la cible 10, un réseau de diffraction capable de séparer les différentes fréquences des signaux pour une analyse spectrale précise, un polariseur ajustable permettant de contrôler la polarisation des ondes électromagnétiques pour améliorer la détection de certains types de matériaux, ou encore un miroir à surface variable pour orienter dynamiquement le faisceau radar et augmenter la zone de couverture du système 100.

Grâce à cette fonctionnalité, cette mise en forme des signaux électromagnétiques par l'élément optique 121 permet d'optimiser les performances du capteur radar 110.

On entend par «mise en forme des signaux électromagnétiques » le processus par lequel l'élément optique 121 modifie les propriétés physiques des ondes électromagnétiques émises et reçues par le capteur radar 110. Cette mise en forme vise à optimiser les performances du système 100 en adaptant les caractéristiques des signaux aux besoins spécifiques de l'analyse non invasive. À titre d'exemple, dans le contexte de l'invention, le terme «mise en forme des signaux électromagnétiques » peut inclure : la focalisation du faisceau radar pour augmenter la résolution spatiale dans une région d'intérêt de la cible 10, la modification du front d'onde pour compenser les distorsions induites par le milieu de propagation, la modulation de la phase des signaux pour améliorer la détection de cibles 10 en mouvement, ou encore l'adaptation de la forme temporelle des impulsions radar pour optimiser la pénétration dans différents types de matériaux tout en maintenant une haute résolution.

Il est important de noter que le couplage optique entre le système optique 120 et le capteur radar 110 assure une intégration efficace de ces deux composants. Ce couplage permet au système optique 120 d'interagir directement avec les signaux électromagnétiques traités par le capteur radar 110.

Dans l'ensemble, l'ajout du système optique 120 au système 100 de scan pour l'analyse non invasive de cibles 10 offre des capacités supplémentaires de traitement des signaux.

Par conséquent, ces capacités améliorent la précision et la qualité de la représentation radar 20 générée par le système 100.

### Processeur de reconstruction de représentation radar

Le système 100 selon l'invention comprend en outre au moins un processeur de reconstruction de représentation radar 130.

Plus précisément, le processeur de reconstruction de représentation radar 130 est couplé fonctionnellement au capteur radar 110.

Dans sa conception, comme illustré sur la [Fig.7], le processeur de reconstruction de représentation radar 130 est conçu pour reconstruire la représentation radar 20.

Concrètement, la reconstruction de la représentation radar 20 s'effectue à partir de tout ou partie des K séquences de mesures.

Il est important de noter que les K séquences de mesures sont générées lors de tout ou partie des acquisitions séquentielles. En pratique, ces acquisitions séquentielles sont réalisées par le capteur radar 110, comme décrit précédemment.

Grâce à cette configuration, le couplage fonctionnel entre le processeur de reconstruction de représentation radar 130 et le capteur radar 110 permet une interaction efficace entre ces deux composants. Par conséquent, ce couplage assure un traitement optimal des données collectées par le capteur radar 110.

En outre, la capacité du processeur de reconstruction de représentation radar 130 à utiliser tout ou partie des K séquences de mesures offre une flexibilité dans le processus de reconstruction. Cette caractéristique clé permet d'optimiser la qualité de la représentation radar 20 reconstruite en fonction des besoins spécifiques de l'application.

### Module d ' intelligence artificielle : fonctionnalités et traitement avancé des données radar

Dans une première mise en œuvre particulière du processeur de reconstruction de représentation radar 130, celui-ci inclut ou est couplé à un module d'intelligence artificielle 140 inclut dans le système 100.

On entend par «module d'intelligence artificielle» un composant logiciel avancé intégré au processeur de reconstruction de représentation radar 130. Ce module utilise des techniques d'apprentissage automatique pour analyser et interpréter les données radar de manière autonome. À titre d'exemple, dans le contexte de l'invention, le terme «module d'intelligence artificielle» peut désigner : un réseau de neurones convolutifs pour l'analyse d'images radar, un algorithme de clustering pour regrouper des objets similaires dans la représentation radar 20, ou encore un système expert basé sur des règles pour l'identification de caractéristiques spécifiques dans les données radar.

Plus précisément, le module d'intelligence artificielle 140 est conçu pour effectuer plusieurs opérations spécifiques.

Tout d'abord, le module d'intelligence artificielle 140 reçoit la représentation radar 20 ou tout ou partie des acquisitions séquentielles.

Il est important de noter que ces données sont désignées comme données d'entrée de modèle. Par la suite, le module d'intelligence artificielle 140 utilise ces données d'entrée de modèle pour ses analyses ultérieures.

Ensuite, à partir des données d'entrée de modèle, le module d'intelligence artificielle 140 détermine les contours d'objets détectés dans la cible.

Cette étape est importante, car cette détermination des contours permet de délimiter les différents objets présents dans la représentation radar 20 ou dans les acquisitions séquentielles.

On entend par «détermination des contours » le processus par lequel le module d'intelligence artificielle 140 identifie et délimite les frontières des objets présents dans la représentation radar 20 ou les acquisitions séquentielles. Cette étape sert à isoler et analyser individuellement les objets détectés. À titre d'exemple, dans le contexte de l'invention, le terme «détermination des contours» peut inclure : l'application d'algorithmes de détection de bords pour identifier les limites d'objets enfouis, l'utilisation de techniques de segmentation d'image pour séparer différentes structures dans une représentation radar 20 complexe, ou encore l'emploi de méthodes de seuillage adaptatif pour distinguer les objets du bruit de fond dans les données radar.

Dans un deuxième temps, le module d'intelligence artificielle 140 extrait ensuite des caractéristiques spécifiques des objets détectés.

Il convient de souligner que cette extraction se fait également à partir des données d'entrée de modèle. Les caractéristiques extraites fournissent des informations détaillées sur chaque objet détecté.

On entend par «caractéristiques extraites » les informations spécifiques et pertinentes que le module d'intelligence artificielle 140 identifie et isole à partir des objets détectés dans la représentation radar 20. Ces caractéristiques servent de base pour l'analyse et la classification ultérieures des objets. À titre d'exemple, dans le contexte de l'invention, le terme « caractéristiques extraites » peut comprendre : la taille et la forme géométrique d'un objet détecté, les propriétés diélectriques estimées d'une structure identifiée, ou encore la texture et la densité apparente d'une zone d'intérêt dans la représentation radar 20.

Finalement, le module d'intelligence artificielle 140 classifie les objets détectés.

Plus précisément, cette classification associe les objets à des classes prédéterminées d'objets. Pour ce faire, le module d'intelligence artificielle 140 effectue cette classification sur la base des caractéristiques extraites précédemment.

En résumé, l'ensemble de ces opérations permet au module d'intelligence artificielle 140 d'analyser en profondeur la représentation radar 20 et d'en extraire des informations structurées sur les objets détectés.

Par ailleurs, dans une première variante de la première mise en œuvre particulière du processeur de reconstruction de représentation radar 130, le module d'intelligence artificielle 140 est conçu pour effectuer des opérations additionnelles.

Dans ce contexte, le module d'intelligence artificielle 140 génère des métadonnées associées à chaque objet détecté.

Plus spécifiquement, les métadonnées comprennent au moins la classification et la position de l'objet dans la représentation radar 20. Le module d'intelligence artificielle 140 crée ainsi un ensemble d'informations structurées pour chaque objet identifié.

On entend par « métadonnées » les informations complémentaires générées par le module d'intelligence artificielle 140 pour enrichir la représentation radar 20. Ces métadonnées fournissent des détails supplémentaires sur les objets détectés, facilitant ainsi leur interprétation et leur analyse ultérieure. À titre d'exemple, dans le contexte de l'invention, le terme « métadonnées » peut inclure : la classification attribuée à un objet détecté (par exemple, «tuyau métallique» ou «cavité»), les coordonnées précises de l'objet dans l'espace de la représentation radar 20, ou encore des informations sur la fiabilité de la détection et de la classification pour chaque objet identifié.

Une fois cette étape terminée, après la génération des métadonnées, le module d'intelligence artificielle 140 intègre ces métadonnées à la représentation radar 20.

Il est important de souligner que cette intégration permet d'enrichir la représentation radar 20 avec des informations détaillées sur chaque objet détecté.

En conséquence, la génération et l'intégration des métadonnées améliorent la qualité et la précision de l'analyse de la représentation radar 20. Ces opérations permettent une interprétation plus approfondie des données collectées par le système 100 de scan pour l'analyse non invasive de cibles 10.

### Module d ' apprentissage en ligne et mise à jour dynamique du système de scan

Dans une autre perspective, dans une deuxième variante de la première mise en œuvre particulière du processeur de reconstruction de représentation radar 130, le système 100 comprend au moins une interface de communication réseau 150 et au moins un module d'apprentissage en ligne 160.

Plus précisément, l'interface de communication réseau 150 est couplée au processeur de reconstruction de représentation radar 130, au module d'apprentissage en ligne 160 et au module d'intelligence artificielle 140.

Parallèlement, le module d'apprentissage en ligne 160 est couplé au module d'intelligence artificielle 140.

On entend par «interface de communication réseau» un composant matériel et logiciel permettant au système 100 de se connecter et d'échanger des données avec des ressources externes, notamment des serveurs distants. Cette interface facilite la mise à jour et l'amélioration continue du système 100. À titre d'exemple, dans le contexte de l'invention, le terme «interface de communication réseau» peut désigner : un module Wi-Fi intégré pour la connexion sans fil à un réseau local, une interface Ethernet pour une connexion filaire à haut débit, ou encore un modem cellulaire pour une connectivité mobile en situation de terrain.

On entend par «module d'apprentissage en ligne» un composant logiciel spécialisé qui permet au système 100 d'améliorer continuellement ses capacités d'analyse en intégrant de nouvelles données et connaissances au fil du temps. Ce module travaille en étroite collaboration avec le module d'intelligence artificielle 140. À titre d'exemple, dans le contexte de l'invention, le terme «module d'apprentissage en ligne» peut comprendre : un algorithme d'apprentissage incrémental capable d'ajuster les modèles de classification sans nécessiter un réentraînement complet, un système 100 de mise à jour des bases de connaissances pour intégrer de nouveaux types d'objets à détecter, ou encore un mécanisme d'adaptation des paramètres d'extraction de caractéristiques basé sur les retours d'expérience des utilisateurs.

Dans ce cadre, le module d'apprentissage en ligne 160 est conçu pour effectuer plusieurs opérations.

Tout d'abord, le module d'apprentissage en ligne 160 établit une connexion avec au moins un serveur distant 200 via l'interface de communication réseau 150 et au moins un réseau de communication 300.

On entend par « serveur distant» une infrastructure informatique externe au système 100, accessible via l'interface de communication réseau 150, qui fournit des ressources de calcul, de stockage et de mise à jour pour améliorer les performances du système 100. À titre d'exemple, dans le contexte de l'invention, le terme « serveur distant » peut désigner : un centre de données cloud hébergeant des modèles d'apprentissage automatique avancés, un serveur de mise à jour centralisant les améliorations logicielles pour tous les systèmes de scan déployés, ou encore une plateforme collaborative permettant le partage d'expériences et de données entre différents utilisateurs du système 100.

Ensuite, le module d'apprentissage en ligne 160 reçoit du serveur distant 200 des données de mise à jour.

On entend par «données de mise à jour» l'ensemble des informations transmises par le serveur distant 200 au module d'apprentissage en ligne 160 pour améliorer les performances du système 100. Ces données permettent d'actualiser et d'enrichir les capacités d'analyse du module d'intelligence artificielle 140. À titre d'exemple, dans le contexte de l'invention, le terme «données de mise à jour» peut inclure : de nouveaux ensembles d'entraînement pour affiner les modèles de classification existants, des corrections d'erreurs identifiées dans les algorithmes de traitement des signaux radar, ou encore des mises à jour de la base de données des signatures radar pour inclure de nouveaux types de matériaux ou d'objets.

Dans un premier exemple des données de mise à jour, celles-ci comprennent de nouveaux modèles de classification.

On entend par «modèles de classification » les structures mathématiques et algorithmiques utilisées par le module d'intelligence artificielle 140 pour catégoriser les objets détectés dans la représentation radar 20. Ces modèles sont mis à jour et améliorés grâce aux données reçues du serveur distant 200. À titre d'exemple, dans le contexte de l'invention, le terme «modèles de classification » peut désigner : un réseau de neurones profond entraîné pour reconnaître différents types de défauts structurels, un ensemble de règles de décision pour identifier les caractéristiques spécifiques de certains matériaux, ou encore un modèle probabiliste pour estimer la nature des objets enfouis en fonction de leur signature radar.

Dans un deuxième exemple des données de mise à jour, celles-ci comprennent de nouvelles classes d'objets à détecter.

On entend par «nouvelles classes d'objets à détecter» les catégories d'éléments ou de structures que le système 100 n'était pas initialement configuré pour identifier, mais qu'il peut désormais reconnaître grâce aux mises à jour. L'ajout de ces nouvelles classes élargit les capacités d'analyse du système 100. À titre d'exemple, dans le contexte de l'invention, le terme «nouvelles classes d'objets à détecter» peut inclure : de nouveaux types de matériaux composites utilisés dans la construction, des configurations spécifiques de défauts structurels récemment identifiés, ou encore des objets archéologiques particuliers pour des applications de prospection.

Dans un troisième exemple des données de mise à jour, celles-ci comprennent des paramètres ajustés pour l'extraction de caractéristiques.

On entend par «paramètres ajustés pour l'extraction de caractéristiques » les variables et configurations optimisées qui permettent au module d'intelligence artificielle 140 d'identifier et d'isoler les informations pertinentes dans les données radar. Ces paramètres sont affinés pour améliorer la précision et l'efficacité de l'analyse. À titre d'exemple, dans le contexte de l'invention, le terme «paramètres ajustés pour l'extraction de caractéristiques» peut comprendre : des seuils de détection adaptés pour différents types de sols ou de structures, des filtres optimisés pour réduire le bruit dans les signaux radar spécifiques à certains environnements, ou encore des paramètres de segmentation ajustés pour mieux isoler les objets dans des représentations radar complexes.

Une fois ces données de mise à jour reçues, le module d'apprentissage en ligne 160 les intègre dans le module d'intelligence artificielle 140.

Par la suite, le module d'apprentissage en ligne 160 adapte dynamiquement les algorithmes de détection et de classification du module d'intelligence artificielle 140 en fonction des données de mise à jour reçues.

On entend par « adapte dynamiquement les algorithmes de détection et de classification» le processus par lequel le module d'apprentissage en ligne 160 modifie et optimise en temps réel les procédures utilisées par le module d'intelligence artificielle 140 pour identifier et catégoriser les objets dans la représentation radar 20. Cette adaptation se fait en fonction des données de mise à jour reçues et des performances observées. À titre d'exemple, dans le contexte de l'invention, le terme « adapte dynamiquement les algorithmes de détection et de classification» peut désigner : l'ajustement automatique des seuils de détection en fonction des conditions environnementales spécifiques à chaque scan, la modification des paramètres de traitement du signal radar pour s'adapter à différents types de matériaux rencontrés, ou encore l'intégration en temps réel de nouvelles règles de classification basées sur les retours d'expérience d'autres utilisateurs du système 100.

On entend par « algorithmes de détection et de classification » les procédures mathématiques et logiques utilisées par le module d'intelligence artificielle 140 pour identifier et catégoriser les objets dans la représentation radar 20. Ces algorithmes s'appuient sur les caractéristiques extraites pour associer chaque objet à une classe prédéfinie. À titre d'exemple, dans le contexte de l'invention, le terme «algorithmes de détection et de classification» peut désigner : un classificateur bayésien pour distinguer différents types de matériaux dans une structure, un algorithme de forêt aléatoire pour identifier la nature des objets enfouis, ou encore un système 100 de support vector machines (SVM) pour catégoriser les anomalies détectées dans une inspection non destructive.

Grâce à cette adaptation, le module d'apprentissage en ligne 160 permet au module d'intelligence artificielle 140 d'identifier et de classer de nouveaux objets détectés conformément aux données de mise à jour.

Enfin, le module d'apprentissage en ligne 160 transmet au serveur distant 200 des informations sur les performances de classification suite à la mise à jour. Cette étape est importante, car cette transmission permet un processus itératif d'amélioration du module d'intelligence artificielle 140.

On entend par «informations sur les performances de classification » les données quantitatives et qualitatives générées par le système 100 pour évaluer l'efficacité et la précision des algorithmes de détection et de classification. Ces informations sont transmises au serveur distant 200 pour permettre une amélioration continue du système 100. À titre d'exemple, dans le contexte de l'invention, le terme « informations sur les performances de classification» peut inclure : des matrices de confusion détaillant les taux de vrais positifs et de faux positifs pour chaque classe d'objets détectés, des mesures de confiance associées à chaque classification effectuée, ou encore des rapports d'erreurs spécifiques identifiant les cas où le système 100 a rencontré des difficultés particulières dans l'analyse des données radar.

En conclusion, l'ajout de ces composants et fonctionnalités au système 100 permet une mise à jour continue et une amélioration des capacités de détection et de classification des objets par le module d'intelligence artificielle 140.

### Processus de reconstruction de la représentation radar et techniques d ' amélioration

Dans une deuxième mise en œuvre particulière du processeur de reconstruction de représentation radar 130, comme illustré sur la [Fig.7], celui-ci est conçu pour reconstruire la représentation radar 20 en effectuant plusieurs étapes.

On entend par «reconstruire» le processus complexe par lequel le processeur de reconstruction de représentation radar 130 génère une image complète et détaillée à partir des données brutes acquises par le capteur radar 110. Cette reconstruction implique plusieurs étapes de traitement des données pour produire une représentation fidèle de la cible 10 analysée. À titre d'exemple, dans le contexte de l'invention, le terme «reconstruire» peut désigner : l'assemblage de multiples segments d'image radar en une vue cohérente d'une structure souterraine, la création d'une carte tridimensionnelle d'un site archéologique à partir de multiples balayages radar, ou encore la génération d'une représentation haute résolution d'un objet enfoui en combinant des données acquises sous différents angles.

Tout d'abord, la première étape consiste en un prétraitement des données acquises.

Plus précisément, le prétraitement comprend l'extraction d'informations de phase et d'amplitude des K séquences de mesures.

On entend par «informations de phase et d'amplitude» les caractéristiques fondamentales des signaux électromagnétiques reçus par le capteur radar 110, qui sont extraites lors du prétraitement des données. Ces informations sont essentielles pour déterminer la distance, la taille et la nature des objets détectés. À titre d'exemple, dans le contexte de l'invention, le terme «informations de phase et d'amplitude» peut inclure : les variations de phase permettant de calculer précisément la profondeur d'un objet enfoui, les changements d'amplitude indiquant la densité ou la composition d'une structure détectée, ou encore les motifs de phase et d'amplitude caractéristiques de certains matériaux ou formes géométriques.

En outre, le prétraitement comprend également la compensation du décalage dc progressif entre les radars.

On entend par « compensation du décalage dc progressif entre les radars » le processus de correction appliqué aux données brutes pour tenir compte de la disposition irrégulière des radars émetteurs-récepteurs 111 dans le capteur. Cette compensation est nécessaire pour obtenir une représentation cohérente et précise de la cible. À titre d'exemple, dans le contexte de l'invention, le terme «compensation du décalage dc progressif entre les radars » peut comprendre : l'ajustement mathématique des temps d'arrivée des signaux pour aligner correctement les données de chaque radar, la correction des distorsions géométriques induites par la configuration en quinconce des émetteurs-récepteurs, ou encore l'application de filtres spatiaux adaptés à la géométrie spécifique du réseau de radars.

Ensuite, la deuxième étape est la génération itérative de segments distincts Ci de la représentation radar 20 pour chaque acquisition.

On entend par « génération itérative » le processus séquentiel et répétitif par lequel le processeur de reconstruction de représentation radar 130 crée des segments distincts Ci de l'image radar pour chaque acquisition. Cette méthode tient compte de la géométrie irrégulière du réseau de radars et utilise les résultats du prétraitement des données pour construire progressivement la représentation complète. À titre d'exemple, dans le contexte de l'invention, le terme « génération itérative » peut désigner : la création successive de tranches d'image radar correspondant à chaque position du capteur lors d'un balayage linéaire d'une structure, l'accumulation graduelle d'informations de profondeur pour construire une représentation 3D d'un site souterrain, ou encore la production séquentielle de vues partielles d'un objet complexe, chacune correspondant à un angle d'observation différent du réseau de radars.

Dans un troisième temps, la troisième étape est la fusion progressive des segments distincts Ci de la représentation radar 20.

On entend par «fusion progressive» le processus itératif par lequel les segments distincts Ci de la représentation radar 20 sont combinés pour former une image complète et cohérente. Cette fusion tient compte des informations de position relative entre le capteur et la cible 10 pour chaque acquisition. À titre d'exemple, dans le contexte de l'invention, le terme «fusion progressive» peut désigner : l'assemblage de tranches d'image radar 2D pour créer une représentation 3D d'une structure complexe, la combinaison de données acquises à différentes fréquences pour améliorer la résolution et la pénétration, ou encore l'intégration de multiples balayages d'une zone pour réduire le bruit et améliorer la qualité globale de l'image.

Concrètement, cette fusion intègre les informations de position relative entre le capteur radar 110 et la cible 10 pour chaque acquisition. La fusion utilise les résultats des étapes précédentes pour affiner le processus de fusion.

Finalement, la quatrième et dernière étape est la génération d'une représentation radar 20 finale par synthèse itérative.

Plus spécifiquement, cette synthèse combine les informations traitées à chaque étape précédente pour produire la représentation radar 20 finale.

En somme, ces étapes permettent au processeur de reconstruction de représentation radar 130 de générer une représentation radar 20 complète et précise à partir des données acquises par le capteur radar 110.

Par ailleurs, dans une variante de la deuxième mise en œuvre particulière du processeur de reconstruction de représentation radar 130, celui-ci est conçu pour effectuer des étapes supplémentaires en plus de celles décrites précédemment.

Tout d'abord, la première étape supplémentaire consiste en l'application de techniques d'amélioration de la résolution.

On entend par «techniques d'amélioration de la résolution» les méthodes avancées de traitement du signal utilisées pour augmenter la précision et le niveau de détail de la représentation radar 20 reconstruite. Ces techniques exploitent la diversité spatiale créée par le décalage dc progressif des radars et s'appuient sur les résultats de la fusion précédemment effectuée. À titre d'exemple, dans le contexte de l'invention, le terme «techniques d'amélioration de la résolution» peut inclure : l'application d'algorithmes de super-résolution pour distinguer des objets rapprochés au-delà de la limite de diffraction théorique, l'utilisation de techniques d'ouverture synthétique pour améliorer la résolution azimutale de l'image radar, ou encore l'emploi de méthodes de déconvolution adaptative pour affiner les contours des objets détectés dans des environnements complexes.

Ensuite, la deuxième étape supplémentaire est un post-traitement adaptatif de la représentation radar 20 fusionnée.

On entend par «post-traitement adaptatif» l'ensemble des opérations effectuées sur la représentation radar 20 fusionnée pour optimiser sa qualité et son interprétabilité. Ce post-traitement s'adapte aux caractéristiques spécifiques des données acquises et peut intégrer des informations supplémentaires fournies par d'autres modules du système 100. À titre d'exemple, dans le contexte de l'invention, le terme «post-traitement adaptatif » peut désigner : l'application de filtres de réduction de bruit adaptés au type de cible analysée, l'intégration de métadonnées générées par le module d'intelligence artificielle 140 pour enrichir l'interprétation de l'image, ou encore l'ajustement dynamique des paramètres de contraste et de luminosité pour mettre en évidence des caractéristiques spécifiques de la représentation radar 20 en fonction des besoins de l'analyse.

Plus précisément, ce post-traitement inclut l'intégration de métadonnées générées par le module d'intelligence artificielle 140, si ce module est présent. En outre, le post-traitement utilise les informations des étapes précédentes pour optimiser le traitement.

Enfin, la troisième étape supplémentaire consiste en l'intégration des résultats des deux étapes précédentes dans la génération de la représentation radar 20 finale.

Il est important de souligner que cette intégration permet une amélioration itérative de la qualité et de la précision de la reconstruction.

En conclusion, ces étapes supplémentaires effectuées par le processeur de reconstruction de représentation radar 130 permettent d'affiner et d'optimiser la représentation radar 20 finale.

Ainsi, le processus itératif d'amélioration assure une qualité et une précision accrues de la reconstruction.

### Processus d ' analyse non invasive de cibles hétérogènes et variantes d ' utilisation du système

L'invention couvre aussi une utilisation du système 100 pour l'analyse non invasive de cibles 10 hétérogènes qui comprend plusieurs étapes.

On entend par «cibles hétérogènes » les objets ou structures complexes analysés par le système 100, caractérisés par une composition non uniforme et des propriétés diélectriques variables. Ces cibles 10 présentent des variations internes qui nécessitent une analyse approfondie et non invasive pour être correctement identifiées et caractérisées. À titre d'exemple, dans le contexte de l'invention, le terme «cibles hétérogènes » peut désigner : une structure géologique comprenant différentes couches de sol et de roche avec des propriétés électromagnétiques distinctes, un bâtiment historique dont les murs contiennent divers matériaux de construction et potentiellement des éléments cachés, ou encore un organisme biologique présentant des tissus de densités et de compositions variées. De plus, le système 100 est particulièrement adapté pour analyser des matériaux tels que le textile ou le bois, qui peuvent présenter des variations internes significatives.

En pratique, ces étapes permettent une analyse approfondie et non invasive des cibles 10 hétérogènes.

On entend par «positionnement» l'étape initiale et fondamentale du processus d'analyse, qui consiste à placer le système 100 dans une configuration optimale par rapport à la cible 10 hétérogène. Ce positionnement est essentiel pour garantir la précision et la fiabilité des données acquises lors des étapes ultérieures de l'analyse. À titre d'exemple, dans le contexte de l'invention, le terme «positionnement» peut inclure : l'ajustement de la distance et de l'angle entre le capteur radar 110 et la surface d'une structure à analyser pour maximiser la pénétration du signal, la mise en place d'un système de balayage automatisé pour couvrir systématiquement une zone d'intérêt sur un site archéologique, ou encore la configuration d'un réseau de capteurs fixes autour d'une cible en mouvement pour assurer une couverture continue et uniforme pendant l'acquisition des données.

Ensuite, la deuxième étape implique l'acquisition de K séquences de mesures. Plus précisément, ces séquences de mesures fournissent les données brutes nécessaires à l'analyse.

Dans un troisième temps, la troisième étape est la reconstruction d'une représentation radar 20 de la cible 10 hétérogène. Il convient de souligner que cette reconstruction utilise les données acquises lors de l'étape précédente.

Par la suite, la quatrième étape consiste en l'analyse de la représentation radar 20. Plus spécifiquement, cette analyse vise à détecter des variations localisées de propriétés diélectriques au sein de la cible. Cette étape est particulièrement importante pour la détection d'anomalies localisées, telles que des points durs, dans des matériaux comme le textile ou le bois.

On entend par « anomalies localisées » des zones au sein d'une cible 10 hétérogène présentant des propriétés diélectriques significativement différentes de leur environnement immédiat. Ces anomalies localisées, qui incluent les points durs, sont particulièrement importantes dans l'analyse non invasive car elles peuvent indiquer la présence de défauts, de structures d'intérêt ou d'éléments étrangers au sein de la cible 10. À titre d'exemple, dans le contexte de l'invention, le terme « anomalies localisées » peut désigner : une inclusion métallique dans une structure en bois pouvant indiquer la présence d'un clou ou d'une vis, une zone de densité accrue dans un matériau textile suggérant un défaut de fabrication ou une réparation. La détection et la caractérisation précises de ces anomalies localisées permettent une analyse approfondie et non destructive de la composition et de la structure interne des cibles 10 hétérogènes.

Puis, la cinquième étape implique la classification des variations détectées. Pour ce faire, cette classification utilise le module d'intelligence artificielle 140 du système 100. Dans le cas de la détection d'anomalies localisées, y compris les points durs, le module d'intelligence artificielle 140 est spécifiquement entraîné pour reconnaître ces variations dans différents types de matériaux.

Enfin, la sixième et dernière étape est la génération d'une carte bidimensionnelle ou tridimensionnelle de la cible. Il est important de comprendre que cette carte intègre les variations classifiées et leurs caractéristiques associées. Pour les anomalies localisées détectées, y compris les points durs, cette carte inclut leur position précise et leurs caractéristiques diélectriques spécifiques.

En somme, l'ensemble de ces étapes permet une analyse complète et détaillée des cibles 10 hétérogènes de manière non invasive.

Il est important de noter que le système 100 offre également la possibilité de générer des images de contraste sans passer par l'étape de classification. Dans ce cas, l'utilisation du système 100 s'arrête après la quatrième étape, produisant une représentation radar 20 qui met en évidence les variations de propriétés diélectriques au sein de la cible 10, sans les catégoriser. Cette option permet une analyse rapide et flexible, particulièrement utile pour des examens préliminaires ou dans des situations où une classification détaillée n'est pas nécessaire.

Dans le cadre spécifique de la détection d'anomalies localisées, y compris les points durs, dans des matériaux comme le textile ou le bois, le module d'intelligence artificielle 140 est conçu pour identifier les variations localisées de propriétés diélectriques correspondant à ces anomalies. Il utilise des modèles d'apprentissage automatique, qui peuvent être spécifiques à un type de matériau ou couvrir plusieurs types, pour classifier ces variations. Le module génère ensuite des métadonnées pour chaque anomalie localisée détectée, incluant sa position et ses caractéristiques diélectriques, qui sont intégrées à la représentation radar reconstruite pour faciliter leur identification et leur analyse.

Par ailleurs, dans une première variante de l'utilisation du système 100, celle-ci présente des caractéristiques supplémentaires lorsque la cible 10 hétérogène est en mouvement relatif par rapport au système 100 pendant l'acquisition des K séquences de mesures.

Dans ce contexte, cette utilisation comprend deux étapes additionnelles.

Premièrement, la première étape additionnelle consiste en la compensation du mouvement relatif dans la reconstruction de la représentation radar 20. Il est important de noter que cette compensation permet d'ajuster la représentation radar 20 en tenant compte du mouvement de la cible 10 par rapport au système 100.

Deuxièmement, la deuxième étape additionnelle implique l'analyse temporelle des variations détectées. Plus précisément, cette analyse temporelle vise à identifier des changements dynamiques au sein de la cible. En conséquence, l'identification de ces changements dynamiques fournit des informations supplémentaires sur le comportement de la cible 10 hétérogène en mouvement.

En résumé, ces étapes additionnelles permettent d'adapter l'analyse non invasive à des cibles 10 en mouvement, offrant ainsi une plus grande flexibilité d'utilisation du système 100. De plus, la compensation du mouvement et l'analyse temporelle enrichissent les capacités d'analyse du système 100 en prenant en compte la dynamique de la cible.

Dans une autre perspective, dans une deuxième variante de l'utilisation du système 100, celle-ci présente des caractéristiques spécifiques concernant l'adaptation dynamique du module d'intelligence artificielle 140.

Plus précisément, le module d'intelligence artificielle 140 s'adapte dynamiquement pendant l'analyse via le module d'apprentissage en ligne 160.

Tout d'abord, l'adaptation dynamique du module d'intelligence artificielle 140 permet l'identification et la classification de nouvelles catégories de variations non préalablement enregistrées.

Il est important de comprendre que cette capacité d'identification et de classification de nouvelles catégories élargit les possibilités d'analyse du système 100.

Ensuite, l'adaptation dynamique permet également l'amélioration continue de la précision de classification des variations détectées. En conséquence, cette amélioration continue de la précision assure une performance croissante du système 100 au fil du temps.

Enfin, l'adaptation dynamique permet l'adaptation en temps réel des paramètres d'acquisition et de reconstruction en fonction des caractéristiques spécifiques de la cible 10 analysée.

Il est important de souligner que cette adaptation en temps réel optimise les performances du système 100 pour chaque cible spécifique.

En conclusion, ces capacités d'adaptation dynamique du module d'intelligence artificielle 140 renforcent la flexibilité et l'efficacité du système 100 dans l'analyse non invasive de cibles 10 hétérogènes.

## Revendications

1. Système (100) de scan pour l'analyse non invasive de cibles (10), comprenant,
- au moins un capteur radar (110) qui comprend une pluralité de radars émetteurs-récepteurs (111) qui sont arrangés en une configuration bidimensionnelle pour générer une représentation radar (20) d'au moins une cible (10),
dans lequel,
- chaque radar émetteur-récepteur (111) présente une empreinte bidimensionnelle prédéterminée identique et est conçu pour, lors d'acquisitions séquentielles, émettre des signaux électromagnétiques via son émetteur et au moins une première antenne (1111), et recevoir des signaux électromagnétiques réfléchis correspondants via son récepteur et au moins une deuxième antenne (1112), les signaux électromagnétiques ayant une fréquence comprise entre 3 GHz et 30 THz,
- pour une matrice de MxN radars émetteurs-récepteurs (111), le système (100) est conçu pour effectuer K acquisitions séquentielles, chaque acquisition correspondant à au moins une mesure effectuée par tout ou partie de la matrice de radars émetteurs-récepteurs (111) et contribuant à un segment distinct, Ci, de la représentation radar (20), pour une position relative différente entre le capteur radar (110) et la cible (10), les acquisitions séquentielles étant obtenues en déplaçant le capteur radar (110) par rapport à la cible (10) ou vice versa, selon une direction de déplacement, D, prédéterminée ou adaptative, permettant ainsi une construction progressive et par morceaux de la représentation radar (20),
- les radars émetteurs-récepteurs (111) sont disposés en un réseau à géométrie irrégulière avec un décalage, dc, progressif entre eux, dans au moins une des deux dimensions de leur empreinte bidimensionnelle, ce décalage étant inférieur à l'empreinte d'un radar émetteur-récepteur (111) individuel dans au moins la dimension correspondante, cet agencement étant conçu de telle sorte que l'acquisition des segments distincts, Ci, de la représentation radar (20) est réalisée progressivement dans le temps, et
- l'arrangement des radars émetteurs-récepteurs (111) et le nombre K d'acquisitions séquentielles sont conçus pour obtenir une résolution spatiale prédéterminée dans la représentation radar (20) qui est substantiellement améliorée par rapport à la résolution correspondant au décalage entre les radars émetteurs-récepteurs (111), cette amélioration étant fonction du nombre total K d'acquisitions et du nombre de radars émetteurs-récepteurs (111) dans au moins une dimension de la configuration bidimensionnelle.

2. Système (100) selon la revendication 1, dans lequel le décalage, dc, progressif entre les radars émetteurs-récepteurs (111) est soit constant avec une valeur de décalage identique entre chaque paire de radars émetteurs-récepteurs (111) adjacents, soit variable avec des valeurs de décalage différentes entre les paires de radars émetteurs-récepteurs (111) adjacents, soit une combinaison de décalages constants et variables entre différentes paires de radars émetteurs-récepteurs (111) adjacents.

3. Système (100) selon l'une quelconque des revendications 1 à 2, dans lequel le réseau à géométrie irrégulière avec décalage, dc, progressif des radars émetteurs-récepteurs (111) est conçu selon un motif géométrique choisi parmi : un décalage linéaire, un motif en quinconce, un motif en spirale, un arrangement fractal, une disposition pseudo-aléatoire, ou un motif en grille déformée.

4. Système (100) selon l'une quelconque des revendications 1 à 3, comprenant au moins un système optique (120) qui est couplé optiquement au capteur radar (110), le système optique (120) comprenant au moins élément optique (121) pour la mise en forme des signaux électromagnétiques émis et reçus par un ou plusieurs des radars émetteurs-récepteurs (111).

5. Système (100) selon l'une quelconque des revendications 1 à 4, comprenant en outre,
- au moins un processeur de reconstruction de représentation radar (130) qui est couplé fonctionnellement au capteur radar (110) et qui est conçu pour reconstruire la représentation radar (20) à partir de tout ou partie des K séquences de mesures générées lors de tout ou partie des acquisitions séquentielles.

6. Système (100) selon la revendication 5, dans lequel le processeur de reconstruction de représentation radar (130) comprend ou est couplé à un module d'intelligence artificielle (140) inclut dans le système (100), le module d'intelligence artificielle (140) étant conçu pour,
- recevoir la représentation radar (20) ou tout ou partie des acquisitions séquentielles, dites données d'entrée de modèle,
- déterminer, à partir des données d'entrée de modèle, les contours d'objets détectés dans la cible (10),
- extraire, à partir des données d'entrée de modèle, des caractéristiques spécifiques des objets détectés,
- classifier les objets détectés en les associant à des classes prédéterminées d'objets, sur la base des caractéristiques extraites.

7. Système (100) selon la revendication 6, dans lequel le module d'intelligence artificielle (140) est en outre conçu pour,
- générer des métadonnées associées à chaque objet détecté, comprenant au moins sa classification et sa position dans la représentation radar (20), et
- intégrer les métadonnées générées à la représentation radar (20).

8. Système (100) selon l'une quelconque des revendications 6 à 7, comprenant en outre,
- au moins une interface de communication réseau (150), et
- au moins un module d'apprentissage en ligne (160) couplé au module d'intelligence artificielle (140), le module d'apprentissage en ligne (160) étant conçu pour,
-- établir une connexion avec un au moins un serveur distant (200) via l'interface de communication réseau (150),
-- recevoir du serveur distant (200) des données de mise à jour comprenant,
--- de nouveaux modèles de classification,
--- de nouvelles classes d'objets à détecter, et/ou
--- des paramètres ajustés pour l'extraction de caractéristiques,
-- intégrer les données de mise à jour reçues dans le module d'intelligence artificielle (140),
-- adapter dynamiquement les algorithmes de détection et de classification du module d'intelligence artificielle (140) en fonction des données de mise à jour reçues,
-- permettre au module d'intelligence artificielle (140) d'identifier et de classer de nouveaux objets détectés conformément aux données de mise à jour, et
-- transmettre au serveur distant (200) des informations sur les performances de classification suite à la mise à jour, de manière à permettre un processus itératif d'amélioration du module d'intelligence artificielle (140).

9. Système (100) selon l'une quelconque des revendication 5 à 8, dans lequel le processeur de reconstruction de représentation radar (130) est conçu pour reconstruire la représentation radar (20) en effectuant les étapes suivantes,
- prétraitement des données acquises, comprenant l'extraction d'informations de phase et d'amplitude des K séquences de mesures et la compensation du décalage, dc, progressif entre les radars,
- génération itérative segments distincts, Ci, de la représentation radar (20) pour chaque acquisition, en tenant compte de la géométrie irrégulière du réseau de radars et en utilisant les résultats du prétraitement,
- fusion progressive des segments distincts, Ci, de la représentation radar (20), intégrant les informations de position relative entre le capteur radar (110) et la cible (10) pour chaque acquisition, et utilisant les résultats des étapes précédentes pour affiner la fusion, et
- génération d'une représentation radar (20) finale par synthèse itérative, combinant les informations traitées à chaque étape.

10. Système (100) selon la revendication 9, dans lequel le processeur de reconstruction de représentation radar (130) est en outre conçu pour effectuer les étapes supplémentaires suivantes,
- application de techniques d'amélioration de la résolution exploitant la diversité spatiale créée par le décalage, dc, progressif des radars, en s'appuyant sur les résultats de la fusion,
- post-traitement adaptatif de la représentation radar (20) fusionnée, incluant l'intégration de métadonnées générées par le module d'intelligence artificielle (140) si présent, et utilisant les informations des étapes précédentes pour optimiser le traitement, et
- intégration des résultats de ces étapes supplémentaires dans la génération de la représentation radar (20) finale, de manière à permettre une amélioration itérative de la qualité et de la précision de la reconstruction.

11. Utilisation d'un système (100) selon l'une quelconque des revendications 1 à 10 pour l'analyse non invasive de cibles (10) hétérogènes, comprenant les étapes suivantes,
- positionnement du système (100) par rapport à une cible hétérogène,
- acquisition de K séquences de mesures,
- reconstruction d'une représentation radar (20) de la cible (10) hétérogène,
- analyse de la représentation radar (20) pour détecter des variations localisées de propriétés diélectriques au sein de la cible (10),
- classification des variations détectées en utilisant le module d'intelligence artificielle (140), et
- génération d'une carte bidimensionnelle ou tridimensionnelle de la cible (10) intégrant les variations classifiées et leurs caractéristiques associées.

12. Utilisation selon la revendication 11, dans laquelle la cible (10) hétérogène est en mouvement relatif par rapport au système (100) pendant l'acquisition des K séquences de mesures, et comprenant en outre les étapes de,
- de compensation du mouvement relatif dans la reconstruction de la représentation radar (20), et
- d'analyse temporelle des variations détectées pour identifier des changements dynamiques au sein de la cible.

13. Utilisation selon l'une quelconque des revendications 11 à 12, dans laquelle le module d'intelligence artificielle (140) est adapté dynamiquement pendant l'analyse via le module d'apprentissage en ligne (160) de manière à permettre,
- l'identification et la classification de nouvelles catégories de variations non préalablement enregistrées,
- l'amélioration continue de la précision de classification des variations détectées, et
- l'adaptation en temps réel des paramètres d'acquisition et de reconstruction en fonction des caractéristiques spécifiques de la cible (10) analysée.

## Patentansprüche

1. Scansystem (100) zur nicht invasiven Analyse von Zielen (10), umfassend:
- mindestens einen Radarsensor (110), der eine Vielzahl von Radar-Sendeempfängern (111) umfasst, die in einer zweidimensionalen Ausgestaltung eingerichtet sind, um eine Radardarstellung (20) mindestens eines Ziels (10) zu erzeugen,
wobei
- jeder Radar-Sendeempfänger (111) einen identischen vorbestimmten zweidimensionalen Erfassungsbereich aufweist und dazu gestaltet ist, bei aufeinanderfolgenden Erfassungen elektromagnetische Signale über seinen Sender und mindestens eine erste Antenne (1111) zu senden und über seinen Empfänger und mindestens eine zweite Antenne (1112) entsprechende reflektierte elektromagnetische Signale zu empfangen, wobei die elektromagnetischen Signale eine Frequenz zwischen 3 GHz und 30 THz aufweisen,
- das System (100) dazu gestaltet ist, für eine Matrix aus MxN Radar-Sendeempfängern (111), K aufeinanderfolgende Erfassungen durchzuführen, wobei jede Erfassung mindestens einer Messung entspricht, die durch die Gesamtheit oder einen Teil der Matrix aus Radar-Sendeempfängern (111) durchgeführt wird, und zu einem getrennten Segment, Ci, der Radardarstellung (20) beiträgt, für eine relative Position, die sich zwischen dem Radarsensor (110) und dem Ziel (10) unterscheidet, die aufeinanderfolgenden Erfassungen durch Verlagern des Radarsensors (110) in Bezug auf das Ziel (10) oder umgekehrt entlang einer vorbestimmten oder adaptiven Verlagerungsrichtung, D, erhalten werden, wodurch ein schrittweiser und stückweiser Aufbau der Radardarstellung (20) ermöglicht wird,
- die Radar-Sendeempfänger (111) in einem Netz mit unregelmäßiger Geometrie mit einem schrittweisen Versatz, dc, voneinander angeordnet sind, wobei in mindestens einer der zwei Dimensionen ihres zweidimensionalen Abdeckungsbereichs, dieser Versatz kleiner als der Abdeckungsbereich eines einzelnen Radar-Sendeempfängers (111) in mindestens der entsprechenden Dimension ist, wobei diese Einrichtung derart gestaltet ist, dass die Erfassung der getrennten Segmente, Ci, der Radardarstellung (20) zeitlich schrittweise ausgeführt wird, und
- die Einrichtung der Radar-Sendeempfänger (111) und die Anzahl K von aufeinanderfolgenden Erfassungen dazu gestaltet sind, eine vorbestimmte räumliche Auflösung in der Radardarstellung (20) zu erhalten, die in Bezug auf die Auflösung, die dem Versatz zwischen den Radar-Sendeempfängern (111) entspricht, wesentlich verbessert ist, wobei diese Verbesserung von der Gesamtanzahl K von Erfassungen und der Anzahl von Radar-Sendeempfängern (111) in mindestens einer Dimension der zweidimensionalen Ausgestaltung abhängig ist.

2. System (100) nach Anspruch 1, wobei der schrittweise Versatz, dc, zwischen den Radar-Sendeempfängern (111) entweder konstant mit einem identischen Versatzwert zwischen jedem Paar benachbarter Radar-Sendeempfänger (111) oder veränderlich mit unterschiedlichen Versatzwerten zwischen den Paaren benachbarter Radar-Sendeempfänger (111) oder eine Kombination aus konstanten und veränderlichen Versätzen zwischen unterschiedlichen Paaren benachbarter Radar-Sendeempfänger (111) ist.

3. System (100) nach einem der Ansprüche 1 bis 2, wobei das Netz mit unregelmäßiger Geometrie mit schrittweisem Versatz, dc, der Radar-Sendeempfänger (111) gemäß einem geometrischen Motiv gestaltet ist, das ausgewählt ist aus: einem linearen Versatz, einem quincunxartigen Motiv, einem spiralförmigen Motiv, einer fraktalen Einrichtung, einer pseudozufälligen Anordnung oder einem verformten Gittermotiv.

4. System (100) nach einem der Ansprüche 1 bis 3, das mindestens ein optisches System (120) umfasst, das optisch an den Radarsensor (110) gekoppelt ist, wobei das optische System (120) mindestens ein optisches Element (121) zur Aufbereitung der elektromagnetischen Signale umfasst, die von einem oder mehreren der Radar-Sendeempfänger (111) gesendet und empfangen werden.

5. System (100) nach einem der Ansprüche 1 bis 4, ferner umfassend,
- mindestens einen Radardarstellungsrekonstruktionsprozessor (130), der funktional an den Radarsensor (110) gekoppelt ist und der dazu gestaltet ist, die Radardarstellung (20) ausgehend von der Gesamtheit oder einem Teil der K Folgen von Messungen zu rekonstruieren, die bei der Gesamtheit oder einem Teil der aufeinanderfolgenden Erfassungen erzeugt werden.

6. System (100) nach Anspruch 5, wobei der Radar-Rekonstruktions- und Darstellungsprozessor (130) ein Künstliche-Intelligenz-Modul (140), das in dem System (100) enthalten ist, umfasst oder daran gekoppelt ist, wobei das Künstliche-Intelligenz-Modul (140) gestaltet ist zum:
- Empfangen der Radardarstellung (20) oder der Gesamtheit oder eines Teils der aufeinanderfolgenden Erfassungen, die Modelleingangsdaten genannt werden,
- Bestimmen, ausgehend von den Modelleingangsdaten, der Konturen von in dem Ziel (10) festgestellten Objekten,
- Extrahieren, ausgehend von den Modelleingangsdaten, der spezifischen Eigenschaften der festgestellten Objekte,
- Klassifizieren der festgestellten Objekte durch ihr Verknüpfen mit vorbestimmten Klassen von Objekten, auf der Grundlage der extrahierten Eigenschaften.

7. System (100) nach Anspruch 6, wobei das Künstliche-Intelligenz-Modul (140) ferner gestaltet ist zum
- Erzeugen von Metadaten, die mit jedem festgestellten Objekt verknüpft sind und mindestens seine Klassifizierung und seine Position in der Radardarstellung (20) umfassen, und
- Integrieren der bei der Radardarstellung (20) erzeugten Metadaten.

8. System (100) nach einem der Ansprüche 6 bis 7, ferner umfassend:
- mindestens eine Netzkommunikationsschnittstelle (150), und
- mindestens ein Online-Lernmodul (160), das an das Künstliche-Intelligenz-Modul (140) gekoppelt ist, wobei das Online-Lernmodul (160) gestaltet ist zum:
-- Herstellen einer Verbindung mit mindestens einem entfernten Server (200) über die Netzkommunikationsschnittstelle (150),
-- Empfangen von Aktualisierungsdaten von dem entfernten Server (200), die umfassen:
--- neue Klassifizierungsmodelle,
--- neue Klassen von festzustellenden Objekten, und/oder
--- Parameter, die zum Extrahieren von Eigenschaften angepasst sind,
-- Integrieren der empfangenen Aktualisierungsdaten in das Künstliche-Intelligenz-Modul (140),
-- dynamisches Anpassen der Erfassungs- und Klassifizierungsalgorithmen des Künstliche-Intelligenz-Moduls (140) in Abhängigkeit von den empfangenen Aktualisierungsdaten,
-- Ermöglichen des Identifizierens und des Klassifizierens neuer festgestellter Objekte durch das Künstliche-Intelligenz-Modul (140) in Übereinstimmung mit den aktualisierten Daten, und
-- Senden, an den entfernten Server (200), von Informationen über die Klassifizierungsleistungen im Anschluss an die Aktualisierung, derart dass ein iterativer Prozess zur Verbesserung des Künstliche-Intelligenz-Moduls (140) ermöglicht wird.

9. System (100) nach einem der Ansprüche 5 bis 8, wobei der Radardarstellungsrekonstruktionsprozessor (130) zum Rekonstruieren der Radardarstellung (20) durch Durchführen der folgenden Schritte gestaltet ist:
- Vorverarbeitung der erfassten Daten, die das Extrahieren von Phasen- und Amplitudeninformationen der K Messfolgen und das Kompensieren des schrittweisen Versatzes, dc, zwischen den Radaren umfasst,
- iteratives Erzeugen getrennter Segmente, Ci, der Radardarstellung (20) für jede Erfassung unter Berücksichtigung der unregelmäßigen Geometrie des Netzes von Radaren und unter Verwendung der Ergebnisse der Vorverarbeitung,
- schrittweises Zusammenführen der getrennten Segmente, Ci, der Radardarstellung (20) durch Integrieren der relativen Positionsinformationen zwischen dem Radarsensor (110) und dem Ziel (10) für jede Erfassung und unter Verwendung der Ergebnisse der vorhergehenden Schritte zum Verfeinern der Zusammenführung, und
- Erzeugen einer endgültigen Radardarstellung (20) durch iterative Synthese unter Kombination der in jedem Schritt verarbeiteten Informationen.

10. System (100) nach Anspruch 9, wobei der Radardarstellungsrekonstruktionsprozessor (130) ferner zum Durchführen der folgenden zusätzlichen Schritte gestaltet ist:
- Anwenden von Techniken zur Verbesserung der Auflösung unter Nutzung der räumlichen Diversität, die durch den schrittweisen Versatz, dc, der Radare erzeugt wird, auf der Grundlage der Ergebnisse der Zusammenführung,
- adaptives Nachverarbeiten der zusammengeführten Radardarstellung (20) unter Einbezug der Integration von Metadaten, die durch das Künstliche-Intelligenz-Modul (140) erzeugt werden, falls vorhanden, und unter Verwendung der Informationen der vorhergehenden Schritte zum Optimieren der Verarbeitung, und
- Integrieren der Ergebnisse dieser zusätzlichen Schritte in die Erzeugung der endgültigen Radardarstellung (20), derart dass eine iterative Verbesserung der Qualität und der Präzision der Rekonstruktion ermöglicht wird.

11. Verwendung eines Systems (100) nach einem der Ansprüche 1 bis 10 zur nicht invasiven Analyse von heterogenen Zielen (10), welche die folgenden Schritte umfasst:
- Positionieren des Systems (100) in Bezug auf ein heterogenes Ziel,
- Erfassen von K Messfolgen,
- Rekonstruieren einer Radardarstellung (20) des heterogenen Ziels (10),
- Analysieren der Radardarstellung (20) zum Feststellen lokalisierter Schwankungen von dielektrischen Eigenschaften in dem Ziel (10),
- Klassifizieren der festgestellten Schwankungen unter Verwendung des Künstliche-Intelligenz-Moduls (140), und
- Erzeugen einer zweidimensionalen oder dreidimensionalen Karte des Ziels (10) unter Einbezug der klassifizierten Schwankungen und ihrer zugehörigen Eigenschaften.

12. Verwendung nach Anspruch 11, wobei das heterogene Ziel (10) sich während der Erfassung der K Messfolgen in einer relativen Bewegung in Bezug auf das System (100) befindet, ferner umfassend die folgenden Schritte:
- Kompensieren der relativen Bewegung in der Rekonstruktion der Radardarstellung (20), und
- zeitliches Analysieren der festgestellten Schwankungen zum Identifizieren der dynamischen Änderungen in dem Ziel.

13. Verwendung nach einem der Ansprüche 11 bis 12, wobei das Künstliche-Intelligenz-Modul (140) während der Analyse über das Online-Lernmodul (160) dynamisch angepasst wird, derart dass Folgendes ermöglicht wird:
- Identifizieren und Klassifizieren neuer, nicht im Voraus aufgezeichneter Kategorien von Schwankungen,
- kontinuierliches Verbessern der Klassifizierungspräzision der festgestellten Schwankungen, und
- Anpassen der Erfassungs- und Rekonstruktionsparameter in Echtzeit in Abhängigkeit von den spezifischen Eigenschaften des analysierten Ziels (10).

## Claims

1. A scanning system (100) for the non-invasive analysis of targets (10), comprising,
- at least one radar sensor (110) which comprises a plurality of transceiver radars (111) arranged in a two-dimensional configuration to generate a radar representation (20) of at least one target (10),
wherein,
- each transceiver radar (111) has an identical predetermined two-dimensional footprint and designed, during sequential acquisitions, to emit electromagnetic signals via its emitter and at least a first antenna (1111), and receive corresponding reflected electromagnetic signals via its receiver and at least a second antenna (1112), the electromagnetic signals having a frequency comprised between 3 GHz and 30 THz,
- for an array of MxN transceiver radars (111), the system (100) is designed to perform K sequential acquisitions, each acquisition corresponding to at least one measurement performed by all or part of the array of transceiver radars (111) and contributing to a distinct segment, Ci, of the radar representation (20), for a different relative position between the radar sensor (110) and the target (10), the sequential acquisitions being obtained by moving the radar sensor (110) relative to the target (10) or vice versa, along a predetermined or adaptive direction of displacement, D, thus allowing a progressive and piecewise construction of the radar representation (20),
- the transceiver radars (111) are disposed in an array with irregular geometry with a progressive offset, dc, between them, in at least one of the two dimensions of their two-dimensional footprint, this offset being less than the footprint of an individual transceiver radar (111) in at least the corresponding dimension, this arrangement being designed such that the acquisition of the distinct segments, Ci, of the radar representation (20) is carried out progressively over time, and
- the arrangement of the transceiver radars (111) and the number K of sequential acquisitions are designed to obtain a predetermined spatial resolution in the radar representation (20) which is substantially improved compared to the resolution corresponding to the offset between the transceiver radars (111), this improvement being a function of the total number K of acquisitions and of the number of transceiver radars (111) in at least one dimension of the two-dimensional configuration.

2. The system (100) according to claim 1, wherein the progressive offset, dc, between the transceiver radars (111) is either constant with an identical offset value between each pair of adjacent transceiver radars (111), or variable with different offset values between the pairs of adjacent transceiver radars (111), or a combination of constant and variable offsets between different pairs of adjacent transceiver radars (111).

3. The system (100) according to any one of claims 1 to 2, wherein the array with irregular geometry with progressive offset, dc, of the transceiver radars (111) is designed in a geometric pattern selected among: a linear offset, a staggered pattern, a spiral pattern, a fractal arrangement, a pseudorandom arrangement or a distorted grid pattern.

4. The system (100) according to any one of claims 1 to 3, comprising at least one optical system (120) optically coupled to the radar sensor (110), the optical system (120) comprising at least one optical element (121) for shaping the electromagnetic signals emitted and received by one or more of the transceiver radars (111).

5. The system (100) according to any one of claims 1 to 4, further comprising:
- at least one radar representation reconstruction processor (130) operatively coupled to the radar sensor (110) and designed to reconstruct the radar representation (20) from all or part of the K sequences of measurements generated during all or part of the sequential acquisitions.

6. The system (100) according to claim 5, wherein the radar representation reconstruction processor (130) comprises or is coupled to an artificial intelligence module (140) included in the system (100), the artificial intelligence module (140) being designed to:
- receive the radar representation (20) or all or part of the sequential acquisitions, called model input data,
- determine, from the model input data, the contours of objects detected in the target (10),
- extract, from the model input data, specific characteristics of the detected objects,
- classify the detected objects by associating them with predetermined classes of objects, based on the extracted characteristics.

7. The system (100) according to claim 6, wherein the artificial intelligence module (140) is further designed to:
- generate metadata associated with each detected object, comprising at least its classification and position in the radar representation (20), and
- integrate the generated metadata into the radar representation (20).

8. The system (100) according to any one of claims 6 to 7, further comprising:
- at least one network communication interface (150), and
- at least one online learning module (160) coupled to the artificial intelligence module (140), the online learning module (160) being designed to:
-- establish a connection with at least one remote server (200) via the network communication interface (150),
-- receive from the remote server (200) update data comprising:
--- new classification models,
--- new classes of objects to be detected, and/or
--- adjusted parameters for the extraction of characteristics,
-- integrate the received update data into the artificial intelligence module (140),
-- dynamically adapt the detection and classification algorithms of the artificial intelligence module (140) as a function of the received update data,
-- allow the artificial intelligence module (140) to identify and classify newly detected objects in accordance with the update data, and
-- transmit to the remote server (200) information on the classification performance following the update, so as to allow an iterative process of improvement of the artificial intelligence module (140).

9. The system (100) according to any one of claims 5 to 8, wherein the radar representation reconstruction processor (130) is designed to reconstruct the radar representation (20) by performing the following steps:
- preprocessing the acquired data, comprising the extraction of phase and amplitude information from the K measurement sequences and the compensation of the progressive offset, dc, between the radars,
- iteratively generating distinct segments, Ci, of the radar representation (20) for each acquisition, by taking into account the irregular geometry of the radar array and by using the results of the preprocessing;
- progressively merging the distinct segments, Ci, of the radar representation (20), integrating the relative position information between the radar sensor (110) and the target (10) for each acquisition, and using the results of the preceding steps to refine the merge, and
- generating a final radar representation (20) by iterative synthesis, combining the information processed at each step.

10. The system (100) according to claim 9, wherein the radar representation reconstruction processor (130) is further designed to perform the following additional steps:
- applying techniques of improvement of the resolution exploiting the spatial diversity created by the progressive offset, dc, of the radars based on the merge results;
- adaptively post-processing the merged radar representation (20), including the integration of metadata generated by the artificial intelligence module (140), if present, and using the information from the preceding steps to optimize the processing, and
- integrating the results of these additional steps into the generation of the final radar representation (20), so as to allow for iterative improvement of the quality and accuracy of the reconstruction.

11. A use of a system (100) according to any one of claims 1 to 10 for the non-invasive analysis of heterogeneous targets (10), comprising the following steps:
- positioning the system (100) relative to a heterogeneous target,
- acquiring K sequences of measurements,
- reconstructing a radar representation (20) of the heterogeneous target (10),
- analyzing the radar representation (20) to detect localized variations in dielectric properties within the target (10),
- classifying the detected variations by using the artificial intelligence module (140), and
- generating a two-dimensional or three-dimensional map of the target (10) integrating the classified variations and their associated characteristics.

12. The use according to claim 11, wherein the heterogeneous target (10) is in relative motion relative to the system (100) during the acquisition of the K sequences of measurements, and further comprising the steps of:
- compensating for the relative motion in the reconstruction of the radar representation (20), and
- temporally analyzing the detected variations to identify dynamic changes within the target.

13. The use according to any one of claims 11 to 12, wherein the artificial intelligence module (140) is dynamically adapted during the analysis via the online learning module (160) so as to allow:
- the identification and classification of new categories of variations not previously recorded,
- the continuous improvement in the accuracy of the classification of the detected variations, and
- the real-time adaptation of the acquisition and reconstruction parameters as a function of the specific characteristics of the analyzed target (10).
